**Europäisches Patentamt**

**European Patent Office**

**Office européen des brevets**

(19)

(11) Numéro de publication : **0 015 259**
**B1**

(12) **FASCICULE DE BREVET EUROPÉEN**

(45) Date de publication du fascicule du brevet :
**26.01.83**

(21) Numéro de dépôt : **79900198.7**

(22) Date de dépôt : **19.02.79**

(86) Numéro de dépôt international :
**PCT/FR 79/00015**

(87) Numéro de publication internationale :
**WO WO/79006 (06.09.79 Gazettee 79/18)**

(51) Int. Cl.³ : **G 01 R 31/08, H 02 H 7/26, H 01 H 83/18**

(54) **PROCEDE ET DISPOSITIF DE DETECTION DE LA POSITION D'UN DEFAUT DANS UNE LIAISON ELECTRIQUE.**

(30) Priorité : **23.02.78 FR 7805205**

(43) Date de publication de la demande :
**17.09.80 Bulletin 80/19**

(45) Mention de la délivrance du brevet :
**26.01.83 Bulletin 83/04**

(84) Etats contractants désignés :
**CH DE GB SE**

(56) Documents cités :
**DE C 458 486**
**DE C 646 348**
**FR A 929 693**

(73) Titulaire : **ENERTEC SOCIETE ANONYME**
**12, Place des Etats-Unis**
**F-92120 Montrouge (FR)**

(72) Inventeur : **HELLER, Isabelle**
**11, avenue du Château**
**F-92190 Meudon (FR)**

(74) Mandataire : **Monod, Jean-Yves et al**
**c/o GIERS SCHLUMBERGER 12, Place des Etats-Unis**
**F-92124 Montrouge Cedex (FR)**

**0 015 259**

Procédé et dispositif de détection de la position d'un défaut dans une liaison électrique

La présente invention concerne un système de détection du type directionnel pour la surveillance des liaisons pour le transport de l'énergie électrique notamment sur grandes distances.

Il faut tout d'abord rappeler qu'une ligne ou liaison de transport de l'énergie électrique ne doit pas être prise seule en elle-même mais dans l'ensemble d'un réseau complexe de lignes. Ainsi, quand un défaut apparaît sur une ligne, les perturbations, qui sont créées par ce défaut, peuvent se répercuter le long du réseau avec plus ou moins d'effet.

Pour pouvoir effectuer une surveillance correcte d'une ligne dans un réseau, il est nécessaire de prendre des précautions particulières. Tout d'abord, toutes les lignes sont surveillées par des dispositifs connus sous la terminologie de « détecteurs de défaut » qui donnent à leur sortie un signal quand apparaît un défaut sur le réseau. Ces détecteurs connus en eux-mêmes, sont par exemple du type à mesure d'impédance. En plus, à chaque point de convergence des lignes sont connectés, de préférence, des dispositifs qui permettent, en orientant les lignes par rapport à ce point de mesure, de déterminer si un défaut est en « amont » ou en « aval » de ce point. Donc si deux de ces dispositifs placés à chaque extrémité d'une ligne et orientés vers la ligne indiquent un défaut « aval », ce dernier est sur la ligne. S'ils donnent à une extrémité une information « amont », le défaut est extérieur à la ligne. Ces dispositifs sont connus sous le nom de relais directionnels (voir DE-C-458 486).

Quand de telles mesures ont été effectuées, les systèmes de surveillance comportent en outre des dispositifs de protection qui analysent « le défaut » et qui, en fonction des résultats de ces analyses, déconnectent la ligne de ses sources d'alimentation dans le but de protéger ces lignes contre toute dégradation qui pourrait se produire sur la ligne et même entraîner sa destruction, du moins partiellement.

Ces dispositifs sont connus par les techniciens familiers avec cette technique sous le nom de « Relais de protection ».

De plus, il faut noter que des défauts sont rarement éphémères. En effet, si le défaut a été provoqué par un court-circuit dont la cause est due à un corps étranger, ce corps étranger a de fortes chances de maintenir le court-circuit. Il est donc nécessaire dans ce cas de localiser le défaut, surtout pour des lignes de grande longueur afin que l'équipe spécialisée la plus proche du défaut puisse intervenir le plus rapidement possible et remettre la ligne en état. Il existe des dispositifs en parallèle au relais de protection qui, par analyse des différents signaux recueillis sur la ligne, permettent de déterminer la distance séparant le défaut d'un point de mesure. Ces derniers dispositifs sont eux connus sous le nom de localisateur de défaut.

Il existe actuellement des dispositifs qui permettent de donner de bons résultats dans la plupart des cas pour les différents besoins mentionnés ci-dessus.

En revanche, on s'est aperçu que même les relais directionnels les plus récents pouvaient fournir des résultats erronés dans certaines liaisons dans lesquelles le transport entre deux points s'effectue par deux lignes en parallèle dans le cas où ces lignes sont compensées par des condensateurs. Dans certaines conditions un relais directionnel est susceptible d'indiquer un défaut amont alors que le défaut réel est en aval.

Il faut en effet rappeler que, pour accroître les puissances transitées dans les lignes, améliorer la stabilité des réseaux et utiliser des lignes de grande longueur, les lignes peuvent être compensées. Une telle compensation est généralement obtenue par une ou plusieurs batteries de condensateurs en série sur les lignes. Ces condensateurs peuvent être placés suivant les cas à différents points de la ligne. De toute façon, le taux global de compensation des lignes ainsi équipées avec des condensateurs, varie en moyenne de trente à soixante-dix pour cent, ce qui fait que, de toute façon, l'impédance totale résultante des lignes compensées reste toujours à dominante selfique.

Ceci étant dit, et comme il a été indiqué ci-avant, la surveillance d'une ligne est toujours effectuée à partir d'un point d'une ligne. Une ligne présente toujours, vue à partir de ce point, une certaine réactance qui est, avec une bonne approximation, en l'absence de condensateur, proportionnelle à la longueur de la ligne vue de ce point. Quand un défaut se produit sur cette ligne, la distance séparant ce défaut du point de mesure sera une fonction linéaire de la réactance par unité de longueur de cette ligne. Dans le reste de la description, cette réactance totale de la portion de la ligne comprise entre le point de mesure et le défaut sera désignée par X.

L'étude de la valeur de cette réactance X par différents moyens permet de déterminer si un défaut est en aval ou en amont du point de mesure, par rapport auquel est prise la valeur de la réactance X. Les relais directionnels connus jusqu'à présent permettent dans tous les cas de définir la position d'un défaut en prenant comme paramètre d'analyse cette réactance X. Cette détermination s'avère toutefois plus ardue dans le cas de deux lignes en parallèle, si elles sont équipées de condensateurs de compensation.

Dans ce cas, en effet, il peut advenir qu'en présence d'un défaut sur une ligne, l'un des relais de la ligne donne une indication de défaut amont au lieu d'indiquer un défaut aval.

L'invention vise à résoudre ce problème et à fournir une indication correcte de défaut sur une ligne en présence d'informations contradictoires sur la position d'un défaut.

Ce problème est résolu par le procédé tel que défini dans la revendication 1.

La revendication 3 décrit un dispositif pour la mise en œuvre de ce procédé.

D'autres aspects et avantages de l'invention apparaîtront à la lecture de la description suivante faite en référence aux dessins annexés sur lesquels :

La figure 1   représente schématiquement une liaison électrique comportant deux lignes en parallèle.

La figure 2   est un schéma électrique de cette liaison ;

La figure 3   est un schéma équivalent au schéma de la figure 2 ;

La figure 4   illustre le mode de représentation utilisé pour les relais directionnels surveillant une ligne ; et

La figure 5   est un schéma synoptique d'un exemple de dispositif pour la mise en œuvre des principes de l'invention.

Un exemple de réalisation de l'invention va être décrit en application à la détection directionnelle sur lignes parallèles compensées par condensateurs série placés en départ de ligne.

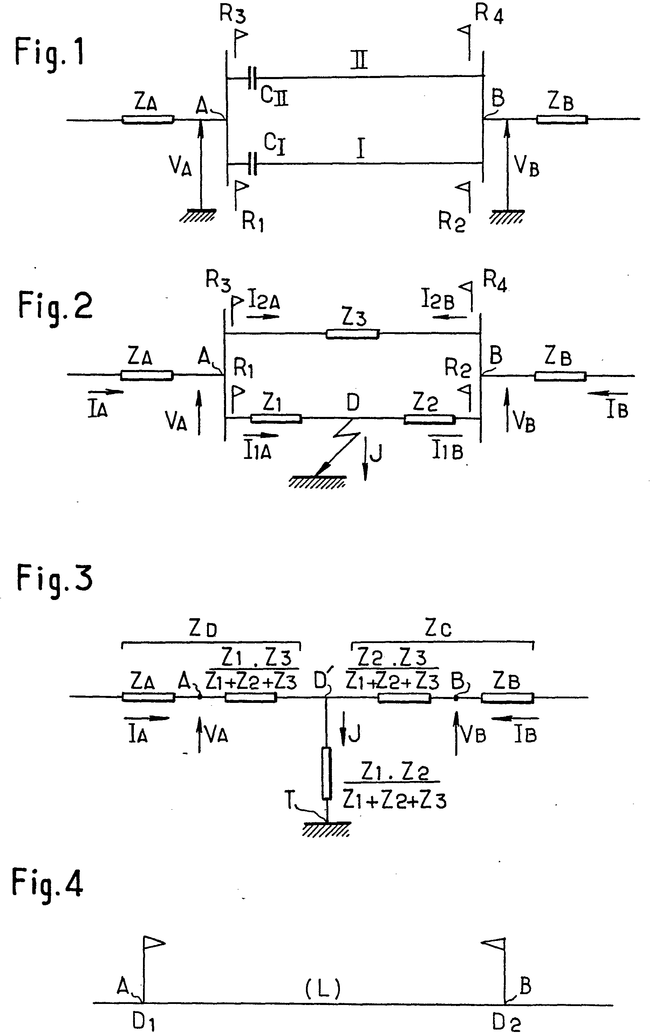

Dans les protections directionnelles classiques, un relais ou élément directionnel est disposé à chaque extrémité d'une ligne (L) pour fournir une information directionnelle. Le relais de la protection $D_1$ sur la figure 4 est branché de manière à regarder la ligne à laquelle il est associé vers l'aval (direction vers laquelle pointe le fanion représentatif sur la figure 4), l'amont correspondant donc à la partie de la liaison électrique située à l'extérieur de la ligne considérée par rapport au point de mesure du relais. Autrement dit, les courants et tensions mesurés au point du relais le sont par référence à une orientation de la ligne déterminée en ce point (par exemple de A vers B au point A). Chaque extrémité de la ligne (L) étant équipée d'un relais respectif $D_1$ et $D_2$, si ces deux relais $D_1$ et $D_2$ fournissent une indication de défaut en aval un défaut pourra être déclaré sur la ligne protégée lorsqu'un élément de démarrage, par exemple un relais à mesure d'impédance, a détecté préalablement l'existence du défaut. La transmission des informations de l'un de ces relais d'une extrémité de ligne à l'autre s'effectue de façon classique par transmission HF sur la ligne de façon à associer les deux informations directionnelles.

Il faut noter aussi qu'une seule indication que le défaut est en amont du relais suffit pour verrouiller le déclenchement d'un dispositif de coupure, disjoncteur ou autre, qui la protège.

Deux schémas sont typiquement utilisés pour réaliser ces fonctions qui sont décrits ci-dessous en se référant à la figure 4 sur laquelle la direction aval de la ligne (L) pour chaque protection $D_1$ et $D_2$ est celle vers laquelle pointe le fanion qui la représente.

### Déclenchement conditionnel avec dépassement (permissive overreach)

La protection $D_1$ envoie vers l'extrémité B une information de permissive overreach lorsqu'elle « voit » le défaut en aval ; elle ne fournit pas de signal lorsqu'elle voit le défaut en amont.

Le déclenchement sur la ligne se produit en principe par une coupure à ses deux extrémités si la protection $D_2$ reçoit de la protection $D_1$ une information de « permissive overreach » et si la protection $D_2$ voit le défaut en aval et par conséquent envoie également vers la protection $D_1$ un signal d'autorisation de déclenchement.

### Schéma à verrouillage — blocking

La protection $D_1$ envoie vers la protection $D_2$ une information de blocage ou de verrouillage lorsqu'elle « voit » le défaut en amont ; lorsqu'elle voit le défaut en aval, elle ne fournit pas de signal.

Si, en l'absence de signal de blocage ou de verrouillage provenant de la protection $D_1$, la protection $D_2$ voit le défaut en aval le déclenchement est provoqué.

Ces indications sont un résumé extrêmement bref de principes utilisés dans la technique de « TELEPROTECTION ». Ces principes et leur mise en œuvre sont discutés en grand détail dans un mémoire publié en mars 1969 par la CIGRE. (Conférence Internationale des Grands Réseaux Electriques — 112 Bd Haussmann — 75008 PARIS) sous le titre « TELEPROTECTION » 317 pages.

Ce mémoire bilingue anglais-français est le résultat du rapport effectué par un groupe de travail commun sur ces questions et discute non seulement les conditions de mise en œuvre de systèmes de protection à partir d'informations reçues de diverses sources mais également les modes de transmission de ces informations (systèmes de télécommunications) pour relier les différentes protections entre elles.

Un principe de fonctionnement classique des relais directionnels est fondé sur la comparaison locale des phases entre grandeurs de tension et de courant mesurés en un point (dit point de mesure) à une extrémité de la ligne. C'est le résultat de cette comparaison qui fournit l'indication amont/aval éventuellement transmise à l'autre extrémité de cette ligne.

Ainsi, par exemple, avec les relais directionnels dits relais d'impédance totale, on compare les phases d'une tension existant au point de mesure lors de l'apparition du défaut (tension mémorisée) et du courant mesuré lors de l'apparition du défaut au point de mesure où se trouve situé le relais. Cette comparaison de phases s'exprime commodément à l'aide du rapport des notations complexes représentatives des tension et courant considérés. Lorsque ce rapport est positif, il indique une concordance de phase des termes du rapport, qui correspond à un défaut en aval du point de mesure. Dans le cas contraire (rapport négatif, discordance de phase) le défaut est en amont.

Avec un type de relais plus récent, dit relais d'impédance amont, la comparaison de phase peut être effectuée entre la différence des tensions mesurées après et avant l'apparition du défaut d'une part, et le courant après défaut d'autre part. Les conclusions tirées de cette comparaison sont analogues au signe près à celles du relais d'impédance totale à savoir qu'une discordance de phase (rapport négatif) est considérée comme caractéristique d'un défaut vers l'aval du point de mesure et une concordance de phase (rapport positif) correspond à un défaut amont.

Lorsqu'on se trouve en présence d'une ligne entre deux points A et B, une indication de défaut en aval par chacun des relais ou éléments directionnels de protection en A et B est normalement nécessaire et suffisante pour déterminer qu'un défaut, dont l'existence même est par ailleurs détectée par un autre dispositif, est bien sur la ligne.

Avec le développement de réseaux électriques complexes, on s'est aperçu cependant que dans certains cas un défaut pouvait se produire entre deux points A et B d'une ligne sans que les éléments directionnels associés à chaque extrémité fournissent une indication de défaut vers l'aval. Il en résulte donc une apparente indétermination dans l'interprétation des indications fournies par ces éléments directionnels, indétermination liée à la position du défaut entre les points A et B le long de la ligne et, par conséquent, à la valeur des impédances complexes des tronçons de ligne situés entre le point de défaut D et les points A et B respectivement (impédances $Z_1$ et $Z_2$ pour la ligne I représentée sur la figure 2).

Conformément à l'invention, on a constaté qu'il était possible de lever l'apparente indétermination qui peut se présenter dans certaines configurations de réseau, mettant en jeu des lignes parallèles entre les deux points A et B du réseau en combinant, dans certaines circonstances au moins, les informations en provenance des éléments directionnels associés à une des lignes avec celles d'au moins un autre élément directionnel associé à une autre ligne entre ces points.

On va montrer, en particulier à l'aide des deux exemples qui vont suivre, comment l'indétermination en question peut être levée lorsqu'elle affecte deux lignes en parallèle entre A et B qui sont équipées de condensateurs de compensation branchés en série, au voisinage de l'une de leurs extrémité A ou B, cette extrémité étant la même pour les deux lignes. On décrira également un dispositif permettant de lever cette indétermination.

Dans la configuration qui vient d'être indiquée, ce dispositif permet le jeu normal de la téléprotection lorsque les deux éléments directionnels associés aux extrémités d'une des lignes indiquent tous deux un défaut aval. Dans le cas où une combinaison d'informations directionnelles contradictoires apparaît sur les lignes en parallèle, il réagit comme si les informations directionnelles fournies par chacun des éléments directionnels associés aux lignes à l'extrémité opposée à celle des condensateurs de compensation avait été inversées pour autoriser ou non suivant le résultat de cette inversion le déclenchement d'une des lignes par le jeu de la téléprotection.

La figure 1 représente une liaison électrique ou portion de réseau dans laquelle deux lignes I et II sont branchées en parallèle entre deux jeux de barres A & B. Chacune de ces lignes I et II est équipée d'un condensateur de compensation respectif $C_I$ et $C_{II}$ branchée en série sur la ligne au voisinage du jeu de barres A. Aucune capacité de compensation n'est présente au voisinage du jeu de barres B.

Les extrémités A et B de la ligne I sont équipées d'éléments directionnels respectifs $R_1$ et $R_2$ tandis que les extrémités correspondantes de la ligne II sont équipées d'éléments directionnels $R_3$ et $R_4$ respectivement.

La figure 2 est le schéma électrique correspondant à la figure 1, lorsqu'on suppose qu'un défaut affecte la ligne I en un point D tel que l'impédance du tronçon de ligne entre la jonction A respectivement B et le point de défaut est $Z_1$ respectivement $Z_2$. L'impédance de la ligne II est représentée par $Z_3$. $V_A$ et $V_B$ sont les tensions mesurées en A et B après l'apparition du défaut. $Z_A$ et $Z_B$ sont les impédances amont par rapport à la liaison AB vues respectivement de A et de B. $I_A$ et $I_B$ sont les courants à travers $Z_A$ et $Z_B$ respectivement. $I_{1A}$, $I_{1B}$, $I_{2A}$ et $I_{2B}$ sont les courants aux extrémités A et B des lignes I et II qui correspondent aux indices numériques et littéraux de ces courants. Ainsi, par exemple, $I_{1A}$ est le courant mesuré à l'extrémité A de la ligne I et alimentant l'élément directionnel $R_1$. On a appelé J le courant de défaut, courant s'écoulant dans l'hypothèse représentée sur la figure 2 entre le point D de la ligne I et la terre. Les notations majuscules utilisées pour les tensions, les courants et les impédances sont des notations complexes à une fréquence donnée en régime permanent.

On considérera également dans ce qui suit les tensions $V_{AM}$ et $V_{BM}$ aux points de mesure A et B juste avant l'apparition du défaut et qui sont mémorisées pour permettre aux éléments respectifs de dériver leur information directionnelle comme il a été expliqué ci-dessus. En outre, la tension $V_D$ au point de défaut D avant l'apparition du défaut est considérée dans les notations qui suivent comme pratiquement égale à $V_{AM}$ et $V_{BM}$ en raison de la valeur supposée nulle du courant de charge, ou, du moins, négligeable par rapport au courant de défaut.

Enfin, on fera apparaître également dans les exemples qui vont suivre trois valeurs particulières pour l'impédance $Z_1$, (laquelle varie avec la position du défaut D), (on confondra ici impédance et réactance), ces valeurs $(Z_1)_1$, $(Z_1)_2$ et $(Z_1)_3$ étant liées par les inéquations :

$$(Z_1)_3 < (Z_1)_2 < (Z_1)_1 < 0$$

A la lumière des définitions et explications précédentes, on examinera des exemples de mise en œuvre de l'invention pour deux types de dispositifs directionnels :

4

Premier dispositif : Mesure d'impédance totale (voir relais directionnel à mémoire, par exemple dans Rapport 34,02 CIGRE 1974, page 7 (Conférence Internationale des Grands Réseaux Electriques Haute Tension, 112 Bd Haussmann 75008 PARIS) par MM. Souillard, Sarquiz et Mouton.

Lors de la mesure d'impédance totale, les grandeurs de mesure sont en chaque point de mesure la tension mémorisée et le courant. Autrement dit, les relais directionnels $R_1$ à $R_4$ utilisent une mesure de tension mémorisée ($V_{AM}$, $V_{BM}$) et une mesure de courant $I_{1A}$, $I_{1B}$, $I_{2A}$ et $I_{2B}$ respectivement.

On dresse le tableau I suivant des différents résultats de comparaison de phase entre tensions mémorisées et courant ($Z_2 < 0$) :

### Tableau I

| | $V_D/I_{1A}$ | $V_D/I_{1B}$ | $V_D/I_{2A}$ | $V_D/I_{2B}$ |
|---|---|---|---|---|
| $Z_1 > 0$ | | | $+$ | $-$ |
| | $+$ | $+$ | .ou | |
| $Z_2 > 0$ | | | $-$ | $+$ |
| $(Z_1)_1 < Z_1 < 0$ | $+$ | $+$ | $-$ | $+$ |
| $(Z_1)_2 < Z_1 < (Z_1)_1$ | $+$ | $-$ | $-$ | $+$ |
| $Z_1 < (Z_1)_2$ | $-$ | $+$ | $+$ | $-$ |

Le signe $+$ correspond à une information directionnelle : défaut aval.

Le signe $-$ correspond à l'information directionnelle : défaut amont.

On admet généralement que l'amorçage des éclateurs aux bornes du condensateur est certain lorsque l'impédance totale est négative. Les condensateurs $C_I$ et $C_{II}$ sont en effet en général protégés par des éclateurs qui s'amorcent lorsque le courant prend des valeurs dangereusement élevées. On peut démontrer (voir par exemple les calculs développés plus loin) que le passage de $Z_1$ à la valeur $(Z_1)_2$ correspondrait à une inversion du signe de l'expression VD/J en passant par zéro, ce qui correspond au passage du courant de défaut par des valeurs très élevées (tendance vers l'infini). Le dernier cas $Z_1 < (Z_1)_2$ ne se produit donc pas ; seuls les trois premiers cas peuvent se réaliser.

Les deux premiers cas $(Z_1 > (Z_1)_1)$ correspondent à un déclenchement sur la ligne I en défaut, alors que l'un des deux directionnels sur la ligne saine II verrouille, conformément aux explications précédentes concernant la téléprotection.

Le troisième cas est un cas de non-déclenchement sur chacune des lignes avec une apparente indétermination : défaut en amont de B selon l'élément $R_2$ ($V_D/I_1B$ négatif) et en amont de A selon l'élément $R_3$ ($V_D/I_{2A}$ négatif).

Le dispositif envisagé pour la mise en œuvre de l'invention procède à un traitement particulier des informations de comparaisons de phase dans ce cas qui est caractérisé par la présence d'un défaut vu, sans déclenchement de l'une des deux lignes :

Il peut inverser les informations directionnelles en B (côté opposé à celui des condensateurs) et prend en compte l'information fournie en A (côté condensateurs).

L'ensemble de ces nouvelles informations directionnelles indique la présence d'un défaut sur la ligne I dont les deux éléments directionnels $R_1$ et $R_2$ voient alors le défaut en aval et l'absence d'un défaut sur la ligne II dont les deux éléments directionnels $R_3$ et $R_4$ voient le défaut en amont.

Sous une autre forme, on peut dire que le dispositif envisagé considère directement la combinaison :

— défaut aval vu en A sur la ligne I (côté condensateur),
— défaut amont vu en B sur la ligne I,
— défaut amont vu en A sur la ligne II (côté condensateur),
— défaut aval vu en B sur la ligne II,

comme caractéristique d'un défaut sur la ligne I et provoque le déclenchement sur cette ligne.

Dans le cas d'un schéma à autorisation conditionnelle avec dépassement (permissive overreach) on considérera comme caractéristique d'un défaut sur la ligne I, la combinaison logique suivante vue en B :

— présence d'un signal de permissive overreach sur la ligne I,
— absence du signal de permissive overreach sur la ligne II,
— information directionnelle amont sur la ligne I,
— information directionnelle aval sur la ligne II.

Dans un schéma à verrouillage ou blocage, la combinaison logique :

— absence d'un signal de blocage sur la ligne I,
— présence d'un signal de blocage sur la ligne II,
— information directionnelle amont sur la ligne I,
— information directionnelle aval sur la ligne II

sera caractéristique d'un défaut sur la ligne I.

En pratique, le dispositif peut être conçu pour réagir à cette combinaison en plus des combinaisons des lignes 1 et 2 du tableau I pour provoquer le déclenchement.

Les quatre indications de relation de phase figurant aux quatre colonnes du tableau I peuvent donc après transmission en une des extrémités de la ligne ou tronçon, être combinées dans un dispositif logique qui provoquera le déclenchement de la ligne I en présence de l'une des combinaisons logiques figurant dans les trois premières lignes de ce tableau, caractéristique d'un défaut sur cette ligne.

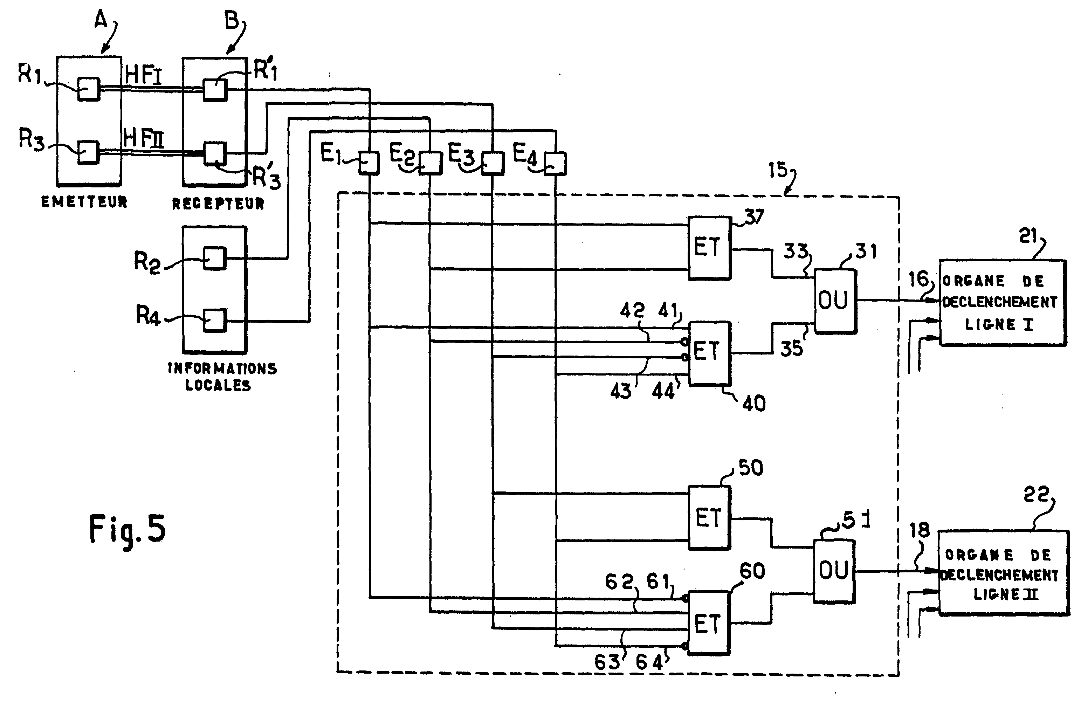

Un dispositif de cette nature est représenté par exemple sur le schéma synoptique de la figure 5 à l'intérieur du cadre en tirets 15, dans lequel un circuit logique à base de portes ET et OU réalise la traduction de la table de vérité qui vient d'être examinée pour l'extrémité B de la liaison considérée.

Le poste situé à cette extrémité est équipé de relais directionnels $R_2$ et $R_4$ scrutant respectivement les lignes I et II en direction de point A. Il comporte en outre deux récepteurs $R'_1$ et $R'_3$ d'informations transmises à haute fréquence sur les lignes I et II respectivement en provenance de deux relais directionnels $R_1$ et $R_3$ scrutant les lignes auxquelles ils sont respectivement affectés en direction de B. Ces relais $R_1$ et $R_3$ sont pourvus d'émetteurs qui communiquent par les liaisons HFI et HFII avec les récepteurs $R'_1$ et $R'_3$ respectivement selon l'une des techniques exposées dans le document mentionné précédemment « TELEPROTECTION ».

Les signaux en provenance des récepteurs $R'_1$ et $R'_3$ et des relais $R_2$ et $R_4$ sont appliqués aux entrées $E_1$, $E_3$, $E_2$, $E_4$ du circuit 15 associé au poste B. Un niveau logique 1 sur une des entrées $E_1$ à $E_4$ correspond à une indication que le relais $R_1$ à $R_4$ de même indice « voit » le défaut en aval.

Le circuit 15 possède deux sorties 16 et 18 commandant chacune un organe de déclenchement d'une ligne respective, ces organes étant désignés par la référence 21 sur la ligne I et 22 pour la ligne II.

La sortie 16 est alimentée par une porte OU 31 à deux entrées 33 et 35. L'entrée 33 est commandée par une porte ET 37 à deux entrées reliées respectivement aux entrées $E_1$ et $E_2$ du dispositif en sorte que si les relais $R_1$ et $R_2$ voient tous deux le défaut en aval de leur position respective, un critère de déclenchement de la ligne I sera émis à travers la porte OU 31 sur la sortie 16.

L'entrée 35 de cette porte OU 31 commandée par une porte ET 40 à quatre entrées 41, 42, 43 et 44 respectivement raccordées aux entrées $E_1$, $E_2$, $E_3$ et $E_4$. Les entrées 42 et 43 sont des entrées inversantes de sorte qu'un critère de déclenchement de la ligne I sera émis à travers la porte OU 31 sur la sortie 16 lorsque $R_1$ et $R_4$ voient le défaut en aval tandis que $R_2$ et $R_3$ le voient en amont.

L'organe de déclenchement de la ligne II peut être mise en action de façon analogue sous la commande de deux portes ET 50 et 60 par l'intermédiaire d'une porte OU 51.

La porte ET 50 à deux entrées raccordées à $E_3$ et $E_4$ détecte la condition d'un défaut vu en aval par les deux relais $R_3$ et $R_4$ surveillant la ligne II. La porte ET 60 à quatre entrées 61 à 64 (dont deux inversantes 61 et 64) respectivement raccordées aux quatre entrées $E_1$ à $E_4$ commande la coupure de la ligne II dans la situation inverse de celle qui fait réagir la porte ET 40, à savoir défaut amont vu par $R_1$ et $R_4$ et défaut aval vu par $R_2$ et $R_3$.

Toute indétermination sur ligne à déclencher est donc levée dans les situations détectées par les portes ET 40 et ET 60. On peut en résumer l'action en disant qu'elles provoquent une autorisation de déclenchement de la ligne I ou II respective au poste B, comme si les indications de $R_2$ et de $R_4$ (relais au poste B opposé aux condensateurs) avaient été inversées dans le cas où l'indétermination apparaît. Elles influencent également le fonctionnement de la téléprotection pour transmettre éventuellement au poste A le signal correspondant pour la ligne en défaut soit dans le cadre de la procédure d'autorisation conditionnelle avec dépassement-permissive overreach- (émission) soit dans le cadre du verrouillage ou blocage (arrêt de l'émission).

Il reste bien entendu que si, par exemple, les relais $R_1$ et $R_3$ au point A voient un défaut aval tandis que les relais $R_2$ et $R_4$ situent ce même défaut en amont il n'y a pas d'indétermination et aucun ordre de déclenchement des lignes I ou II ne se produira.

L'avantage de ce dispositif est de conserver l'intérêt du directionnel d'impédance totale, qui permet la mesure de tension en aval des condensateurs, ce qui facilite la transmission haute fréquence des informations directionnelles d'une extrémité à l'autre.

Second dispositif directionnel : Mesure d'impédance amont (voir publication FR-A-2 380 631).

Lors de la mesure d'impédance amont, les grandeurs de mesure sont en chaque point la variation de tension (tension après défaut — tension avant défaut), et le courant.

On peut dresser le tableau II suivant des comparaisons de phase entre tension et courant mesurés :

(Voir Tableau II, page 7)

6

Tableau II

| | $V_A - V_D/I_1A$ | $V_B - V_D/I_1B$ | $V_A - V_D/I_2A$ | $V_B - V_D/I_2B$ |
|---|---|---|---|---|
| $Z_1 > 0$ | | | + | − |
| | − | − | ou | |
| $Z_2 > 0$ | | | − | + |
| $(Z_1)_1 < Z_1 < 0$ | − | − | + | − |
| $(Z_1)_3 < Z_1 < (Z_1)_1$ | − | + | + | − |
| $Z_1 < (Z_1)_3$ | − | − | + | + |

Le signe − correspond à une information directionnelle : défaut aval.

Le signe + correspond à une information directionnelle : défaut amont.

Le dispositif envisagé peut être réalisé de façon identique avec une inversion de signe des entrées au dispositif de la figure 5 et procède, comme ce dispositif, à un traitement particulier des informations de comparaison de phase lorsqu'un défaut est détecté en l'absence de déclenchement sur les deux lignes :

il peut inverser les informations directionnelles en B (côté opposé aux condensateurs) et prend en compte l'information fournie en A ou sous une autre forme :

— défaut aval vu en A sur la ligne I (côté condensateurs),
— défaut amont vu en B sur la ligne I,
— défaut amont vu en A sur la ligne II, (côté condensateurs),
— défaut aval vu en B sur la ligne II,

comme caractéristique d'un défaut sur la ligne I et provoque le déclenchement sur cette ligne.

L'intérêt d'un tel dispositif est qu'il fonctionne dans toutes les conditions possibles : il ne fait ainsi pas d'hypothèse sur les conditions d'amorçage des éclateurs aux bornes des condensateurs.

On peut tenter de formuler une justification des résultats précédents, tels qu'ils se trouvent résumés dans les tableaux I et II, en étudiant la phase de toutes les grandeurs accessibles à chaque extrémité des deux lignes I et II par rapport à celle d'une grandeur de référence, laquelle est choisie comme le courant de défaut J, affectant la ligne I. On aboutit ainsi au tableau III ci-après d'où sont dérivés, par élimination du terme de référence J, les tableaux I et II précédemment étudiés et qui ne font intervenir que les grandeurs respectives directement mesurées par les éléments directionnels $R_1$, $R_2$, $R_3$ et $R_4$ chacun pour l'extrémité qui le concerne.

On partira d'un certain nombre d'hypothèses :

— on néglige tous les termes résistifs (en particulier on s'intéresse à des défauts francs) ;
— le courant de charge est supposé nul (ou négligeable par rapport au courant de défaut).

La compensation de la ligne étant inférieure à 100 %,

les réactances $Z_A$, $Z_1 + Z_2$, $Z_3$ sont positives à la fréquence fondamentale, par exemple 50 Hz.

Les grandeurs disponibles à chaque point de mesure A et B pour alimenter les protections sont les tensions $V_A$ et $V_B$, les tensions mémorisées (avant défaut) $V_{AM}$ et $V_{BM}$ aux points de mesure A et B et les courants $I_{1A}$, $I_{1B}$, $I_{2A}$, et $I_{2B}$.

On peut construire le schéma de la figure 3 équivalent à celui de la figure 2 en appliquant la transformation étoile-triangle, c'est-à-dire, en remplaçant le triangle, A, D, B, de la figure 2 dans lequel D est le point de défaut, par un circuit étoile de sommet D′ dont les extrémités sont A, B et T (la terre) et dont les branches ont les impédances suivantes :

$$D'A : \frac{Z_1 \, Z_3}{Z_1 + Z_2 + Z_3}$$

$$D'B : \frac{Z_2 \, Z_3}{Z_1 + Z_2 + Z_3}$$

$$D'T : \frac{Z_1 \, Z_2}{Z_1 + Z_2 + Z_3}$$

On pose :

7

$$Z_T = Z_1 + Z_2 + Z_3$$

$$Z_D = Z_A + \frac{Z_1 \, Z_3}{Z_T}$$

$$Z_C = Z_B + \frac{Z_2 \, Z_3}{Z_T}$$

$$Z_G = Z_C + Z_D$$

VD étant la tension avant défaut au point de défaut et le courant de charge étant nul, on peut écrire :

$$V_{AM} = V_{BM} = V_D$$

On peut déterminer les valeurs des tension et courant relatives à chaque point de mesure en fonction du courant de défaut J (défaut sur la ligne I) :

$$I_A = J . \frac{Z_C}{Z_C + Z_D}$$

$$I_B = J . \frac{Z_D}{Z_C + Z_D}$$

$$V_A = \frac{Z_1 \, Z_3}{Z_T} \, I_A + \frac{Z_1 \, Z_2}{Z_T} \, J$$

$$= J \, \frac{Z_1}{Z_T} \quad \frac{Z_3 \, Z_C + Z_2 \, (Z_C + Z_D)}{Z_C + Z_D}$$

Par symétrie :

$$V_B = J \, \frac{Z_2}{Z_T} \, . \, \frac{Z_3 \, Z_D + Z_1 \, (Z_C + Z_D)}{Z_C + Z_D}$$

$$I_{1A} = \frac{V_A}{Z_1} = J \, . \, \frac{Z_3 \, Z_C + Z_2 \, (Z_C + Z_D)}{Z_T \, (Z_C + Z_D)}$$

$$I_{1B} = \frac{V_B}{Z_2} = J \, . \, \frac{Z_3 \, Z_D + Z_1 \, (Z_C + Z_D)}{Z_T \, (Z_C + Z_D)}$$

$$I_{2A} = \frac{V_A - V_B}{Z_3} = J \, \frac{Z_1 \, Z_C - Z_2 \, Z_D}{Z_T \, (Z_C + Z_D)}$$

$$= J \, \frac{Z_1 \, Z_B - Z_2 \, Z_A}{Z_T \, (Z_C + Z_D)}$$

$$I_{2B} = J \, \frac{Z_2 \, Z_A - Z_1 \, Z_B}{Z_T \, (Z_C + Z_D)}$$

$$V_D = J \, (\frac{Z_1 \, Z_2}{Z_T} + \frac{Z_C \, Z_D}{Z_C + Z_D}) = J \, \frac{Z_1 \, Z_2 \, (Z_C + Z_D) + Z_C Z_D Z_T}{Z_T \, (Z_C + Z_D)}$$

Lorsqu'on veut comparer la phase entre les grandeurs aux différents points et le courant de défaut, trois types de cas sont à envisager : (on confondra ici impédance et réactance).

(1) $Z_1 > 0$, $Z_2 > 0$
(2) $Z_1 < 0$, $Z_2 > 0$   qui peut se produire si les condensateurs en A
(3) $Z_1 > 0$, $Z_2 < 0$   qui peut se produire si les condensateurs sont en B (symétrie du cas 2).

Le cas 2 va être étudié en détail, le cas 1 étant analogue à celui d'une ligne normale sans condensateur.
Lorsque $Z_1 < 0$ et $Z_2 > 0$ on peut écrire en fonction des équations précédentes :

$$V_A/J < 0, \; I_{1A}/J > 0, \; I_{2A}/J < 0, \; I_{2B}/J > 0 \text{ et } V_A - V_D/J < 0$$

Les phases de $I_{1B}$, $V_B$, $V_D$ et $V_B - V_D$ par rapport à celle de J dépendent de la valeur de $Z_1$.
On voit que $V_B$ et $I_1B$ restent constamment en phase.
Il est intéressant d'étudier les changements des signes d'un certain nombre d'expressions en fonction de la valeur de $Z_1$. En particulier, on peut déterminer que :
$V_B/J$ change de signe en passant par zéro lorsque $Z_1 = (Z_1)_1$ d'où un changement de la relation de phase entre $V_A$ et $V_B$ lorsque $Z_1 = (Z_1)_1$.
Physiquement : tant que $Z_1 > (Z_1)_1$, $V_B$ conserve le signe qu'il avait avant l'apparition du défaut ; lorsque $Z_1$ devient inférieur à $(Z_1)_1$, $V_B$ prend le signe de $V_A$, c'est-à-dire en fait quand le défaut se rapproche du condensateur $C_I$.
$V_D/J$ change de signe en passant par zéro lorsque $Z_1 = (Z_1)_2$ d'où un changement de la relation de phase entre $V_A$ et $V_D$ lorsque $Z_1 = (Z_1)_2$.
Physiquement : cela signifie que lorsque $Z_1$ devient inférieur à $(Z_1)_2$, le courant de défaut devient capacitif.
On détermine $(Z_1)_1$ et $(Z_1)_2$ en considérant que :

$$\frac{V_B}{V_A} < 0 \quad \text{pour} \quad Z_1 > - \frac{Z_A Z_T}{Z_3 \left(1 + \dfrac{Z_G Z_T}{Z_3 \, 2}\right)}$$

$$\text{d'où} \quad (Z_1)_1 = - \frac{Z_A Z_T}{Z_3 \left(1 + \dfrac{Z_G Z_T}{\dfrac{2}{Z_3}}\right)}$$

$$\frac{V_A}{V_D} < 0 \quad \left(\text{ou} \; \frac{I_{1A}}{V_D} > 0\right) \quad \text{pour} \quad Z_1 > - \frac{Z_A Z_T}{Z_3 \left(1 + \dfrac{Z_2 Z_G}{Z_C Z_3}\right)}$$

$$\text{d'où} \quad (Z_1)_2 = - \frac{Z_A Z_T}{Z_3 \left(1 + \dfrac{Z_A Z_G}{Z_C Z_3}\right)}$$

$$\text{on note que} \quad \left|(Z_1)_2\right| > \left|(Z_1)_1\right|$$

De la même manière, $V_B - V_D/J$ change de signe en passant par zéro lorsque $Z_1 = (Z_1)_3$ d'où un changement de relation de phase entre $V_B - V_D$ et $V_A$ au moment où $Z_1$ passe par la valeur $(Z_1)_3$. De la même façon la relation de phase entre $V_B - V_D$ et $V_A - V_D$ s'inverse lorsque $Z_1$ devient inférieur à $(Z_1)_3$.
On peut comme précédemment déterminer que

$$(Z_1)_3 = - Z_A Z_T / Z_3$$

et on note que

$$(Z_1)_3 < (Z_1)_2 < (Z_1)_1 < 0$$

Pour récapituler, on peut dresser le tableau III ci-après donnant les phases relatives des grandeurs de mesure par rapport au courant de défaut J lorsque la ligne I est en défaut.

Le signe − représente la discordance des phases.

Le signe + représente l'accord des phases.

On remarque que les tableaux I et II se déduisent directement de ce tableau III.

Tableau III

| | $\dfrac{V_D}{J}$ | $\dfrac{V_A}{J}$ | $\dfrac{V_A - V_D}{J}$ | $\dfrac{I_{1A}}{J}$ | $\dfrac{I_{2A}}{J}$ | $\dfrac{V_B}{J}$ | $\dfrac{V_B - V_D}{J}$ | $\dfrac{I_{1B}}{J}$ | $\dfrac{I_{2B}}{J}$ |
|---|---|---|---|---|---|---|---|---|---|
| $Z_1 > 0, Z_2 > 0$ | + | + | − | + | − ou + | + | − | + | + ou − |
| $(Z_1)_1 < Z_1 < 0$ | + | − | − | + | − | + | − | + | + |
| $(Z_1)_2 < Z_1 < (Z_1)_1$ | + | − | − | + | − | − | − | − | + |
| $(Z_1)_3 < Z_1 < (Z_1)_2$ | − | − | − | + | − | − | − | − | + |
| $Z_1 < (Z_1)_3$ | − | − | − | + | − | − | + | − | + |

On peut noter que lorsque $Z_1 = (Z_1)_1$, la tension $V_B$ et le courant $I_{1B}$ passent tous deux par zéro. En conséquence, l'élément directionnel $R_2$ fournit une indication incertaine. Ceci n'empêche pas cependant d'obtenir une indication correcte à partir des trois autres informations directionnelles qui permettent de lever l'indétermination comme il a été expliqué plus haut.

Revenant momentanément sur la figure 5, les critères de déclenchement des lignes I et II apparaissant sur les lignes 16 et 18 respectivement agissent pour provoquer la coupure de la ligne au niveau du poste B par les organes de déclenchement 21 et 22, sous réserve d'ailleurs, en général, qu'un certain nombre d'autres conditions sans intérêt pour la présente discussion soient satisfaites. Il existe des organes de coupure similaires au poste A qui réagissent dans le cadre des procédures de téléprotection à la commande de déclenchement de la ligne correspondante pour que les deux extrémités de la ligne soient coupées.

On remarquera également que les entrées 44 et 62 des portes ET 40 et ET 60 ne sont pas à strictement parler nécessaires. Selon un aspect complémentaire de l'invention on observe en effet que trois informations directionnelles sont suffisantes sur les quatre envisagées pour indiquer la présence ou l'absence d'un défaut sur une des lignes I ou II sélectionnée à l'avance. En pratique, si l'on considère la ligne I, au poste B par exemple, les informations en provenance des relais $R_1$, $R_3$ et $R_2$ sont suffisantes pour déterminer que le défaut est sur la ligne, ou, au contraire, se trouve soit sur la ligne II, soit en amont du poste B, étant entendu que l'indétermination mise en lumière précédemment ne se produit pas dans le cas d'un défaut en amont de A. Ainsi lorsqu'on considère une ligne déterminée en un poste, l'information de l'élément directionnel associé à l'autre ligne sur ce poste est indifférente pour la détermination de la présence du défaut par rapport à la première ligne.

La technique exposée jusqu'à présent s'applique aux relais directionnels d'impédance totale ou d'impédance amont quelqu'en soit le mode, c'est-à-dire par exemple interphase, homopolaire ou inverse.

Il faut également noter que l'indication directionnelle obtenue dans tous les cas envisagés est correcte que les condensateurs $C_I$ et $C_{II}$ soient ou non en service, ensemble ou séparément, dans la position représentée sur la figure 1, c'est-à-dire d'un même côté par rapport au milieu de chaque ligne.

### Revendications

1. Procédé de détection de la position d'un défaut dans une liaison électrique comportant deux lignes (I, II) en parallèle entre un premier point (A) et un second point (B), chaque ligne comprenant un premier élément directionnel ($R_1$, $R_3$) au premier point (A) et un second élément directionnel ($R_2$, $R_4$) au second point (B), chacun de ces éléments ayant sa sortie dans un premier état logique lorsqu'il décèle un défaut aval et dans l'autre état logique en présence d'un défaut amont, l'indication simultanée d'un défaut aval par les deux éléments ($R_1$, $R_2$ ; $R_3$, $R_4$) d'une même ligne (I ; II) produisant l'indication qu'un défaut est présent sur cette ligne, caractérisé par le fait que, dans le cas où les portions de ligne se terminant par le premier point (A) comportent un condensateur en série ($C_I$, $C_{II}$), on émet en outre une indication de défaut sur une ligne (I ; II) lorsque le premier élément ($R_1$ ; $R_3$) de cette ligne indique un défaut aval et le second élément ($R_2$ ; $R_4$) un défaut amont, et que le premier élément ($R_3$ ; $R_1$) de l'autre ligne (II ; I) indique un défaut amont.

2. Procédé selon la revendication 1, caractérisé par le fait que lorsque le premier élément ($R_1$ ; $R_3$)

**0 015 259**

d'une ligne (I ; II) indique un défaut aval et le second élément ($R_2$ ; $R_4$) un défaut amont, on émet une indication de défaut sur cette ligne et que le premier élément ($R_3$ ; $R_1$) de l'autre ligne (II ; I) indique un défaut amont et le second élément ($R_4$ ; $R_2$) un défaut aval.

3. Dispositif de mise en œuvre du procédé selon la revendication 1, pour détecter la position d'un défaut dans une liaison électrique comportant deux lignes (I, II) en parallèle entre un premier point (A) et un second point (B), le dispositif comprenant sur chaque ligne un premier élément directionnel ($R_1$, $R_3$) au premier point (A) et une second élément directionnel ($R_2$, $R_4$) au second point (B), chacun de ces éléments ayant sa sortie dans un premier état logique lorsqu'il décèle un défaut aval et dans l'autre état logique en présence d'un défaut amont, et deux circuits ET (37 ; 50) recevant respectivement les signaux de sortie du premier et du second éléments ($R_1$, $R_2$ ; $R_3$, $R_4$) de chaque ligne, caractérisé par le fait que, dans le cas où les portions de ligne se terminant par le premier point (A) comportent un condensateur en série ($C_I$, $C_{II}$), la sortie du circuit ET (37 ; 50) associé à une ligne (I ; II) est reliée à une entrée d'un circuit OU (31 ; 51) dont l'autre entrée est reliée à la sortie d'un second circuit ET respectif (40 ; 60) dont les entrées sont reliées aux sorties respectives des deux éléments ($R_1$, $R_2$ ; $R_3$, $R_4$) de la ligne associée et du premier élément ($R_3$ ; $R_1$) de l'autre ligne.

4. Dispositif selon la revendication 3, caractérisé par le fait qu'une entrée supplémentaire du second circuit ET (40 ; 60) associé à une ligne (I ; II) est également reliée à la sortie du second élément ($R_4$ ; $R_2$) de l'autre ligne.

## Claims

1. A method for detecting the location of a fault on an electric link comprising two lines (I, II) in parallel between a first point (A) and a second point (B), each line comprising a first directional unit ($R_1$, $R_3$) at the first point (A) and a second directional unit ($R_2$, $R_4$) at the second point (B), each of said units having its output in a first logical state when it detects a forward fault and in the other logical state in the presence of a backward fault, the simultaneous indication of a forward fault by both units ($R_1$, $R_2$, $R_3$, $R_4$) of a same line (I, II) generating an indication that a fault is present on said line, said method being characterized in that, when the line portions ending at the first point (A) include a capacitor in series ($C_I$, $C_{II}$), a signal indicative of a fault on a line (I, II) is also generated when the first directional unit ($R_1$, $R_3$) of said line indicates a forward fault and the second unit ($R_2$, $R_4$) indicates a backward fault, and when a backward fault is indicated by the first unit ($R_3$, $R_1$) of the other line (II, I).

2. The method of claim 1 characterized in that, when the first unit ($R_1$, $R_3$) of a line (I, II) indicates a forward fault and the second unit ($R_2$, $R_4$) indicates a backward fault, a signal indicative of a fault on said line is generated when the first unit ($R_3$, $R_1$) of the other line (II, I) indicates a backward fault and the second unit ($R_4$, $R_2$) indicates a forward fault.

3. A device to carry out the method of claim 1, for detecting the location of a fault on an electric link comprising two lines (I, II) in parallel between a first point (A) and a second point (B), said device comprising on each line a first directional unit ($R_1$, $R_3$) at the first point (A) and a second directional unit ($R_2$, $R_4$) at the second point (B), each of said units having its output in a first logical state when it detects a forward fault, and in the other logical state in the presence of a backward fault, and two AND gates (37 ; 50) receiving the output signals from the first and second units ($R_1$, $R_2$, $R_3$, $R_4$) of each line respectively, characterized in that, when the line portions ending at the first point (A) include a capacitor in series ($C_I$, $C_{II}$), the output of the AND gate (37, 50) attached to one line (I, II) is connected to one input of an OR gate (31, 51) the other input of which is connected to the output of a second respective AND gate (40, 60) whose inputs are connected to the respective outputs of both units ($R_1$, $R_2$, $R_3$, $R_4$) of the associated line and of the first unit ($R_3$, $R_1$) of the other line.

4. Device of claim 3 characterized in that an additional input of the second AND gate (40, 60) attached to one line (I, II) is also connected to the output of the second unit ($R_4$, $R_2$) of the other line.

## Ansprüche

1. Verfahren zur Erfassung des Ortes eines Fehlers in einer elektrischen Verbindung, die zwei parallele Leitungen (I, II) zwischen einem ersten Punkt (A) und einem zweiten Punkt (B) umfaßt, wobei jede Leitung an dem ersten Punkt (A) ein erstes direktives Element ($R_1$, $R_3$) und an dem zweiten Punkt (B) ein zweites direktives Element ($R_2$, $R_4$) umfaßt, wobei der Ausgang jedes dieser Element in einem ersten logischen Zustand ist, wenn es einen Fehler stromabwärts feststellt und in dem anderen Logikzustand ist, wenn stromaufwärts ein Fehler vorhanden ist, und wobei die gleichzeitige Anzeige eines stromabwärts liegenden Fehlers durch beide Elemente ($R_1$, $R_2$ ; $R_3$, $R_4$) ein und derselben Leitung (I ; II) eine Anzeige hervorruft, daß in dieser Leitung ein Fehler vorhanden ist, dadurch gekennzeichnet, daß für den Fall, daß diejenigen Leitungsteile, die in dem ersten Punkt (A) enden, einen Reihenkondensator ($C_I$, $C_{II}$) enthalten, ferner eine Fehleranzeige auf eine Leitung (I ; II) ausgesandt wird, wenn das erste Element ($R_1$ ; $R_3$) dieser Leitung einen stromabwärts liegenden Fehler anzeigt und das zweite Element ($R_2$ ; $R_4$) einen stromaufwärts liegenden Fehler anzeigt, während das erste Element ($R_3$ ; $R_1$) der anderen Leitung (II ; I) einen stromaufwärts liegenden Fehler anzeigt.

2. Verfahren nach Anspruch 1, dadurch gekennzeichnet, daß, wenn das erste Element ($R_1$ ; $R_3$) einer Leitung (I ; II) einen stromabwärts liegenden Fehler und das zweite Element ($R_2$ ; $R_4$) einen stromaufwärts liegenden Fehler anzeigt, eine Fehleranzeige auf diese Leitung ausgesandt wird, während das erste Element ($R_3$ ; $R_1$) der anderen Leitung (II ; I) einen stromaufwärts liegenden Fehler und das zweite Element ($R_4$ ; $R_2$) einen stromabwärts liegenden Fehler anzeigt.

3. Vorrichtung zur Durchführung des Verfahrens nach Anspruch 1, zur Erfassung des Ortes eines Fehlers in einer elektrischen Verbindung, die zwei parallele Leitungen (I, II) zwischen einem ersten Punkt (A) und einem zweiten Punkt (B) umfaßt, wobei die Vorrichtung in jeder Leitung an dem ersten Punkt (A) ein erstes direktives Element ($R_1$, $R_3$) und in dem zweiten Punkt ein zweites direktives Element ($R_2$, $R_4$) umfaßt, wobei der Ausgang jedes dieser Elemente in einem ersten Logikzustand ist, wenn es einen stromabwärts liegenden Fehler feststellt, und in dem anderen Logikzustand ist, wenn ein stromaufwärts liegender Fehler vorhanden ist, mit zwei AND-Schaltungen (37 ; 50), von denen die eine die Ausgangssignale des ersten und die andere die Ausgangssignale des zweiten Elementes ($R_1$, $R_2$ ; $R_3$, $R_4$) jeder Leitung empfängt, dadurch gekennzeichnet, daß, für den Fall, daß diejenigen Leitungsteile, die in dem ersten Punkt (A) enden, einen Reihenkondensator ($C_I$, $C_{II}$) umfassen, der Ausgang der einer Leitung (I ; II) zugeordneten AND-Schaltung (37 ; 50) mit einem Eingang einer OR-Schaltung (31 ; 51) verbunden ist, deren anderer Eingang mit dem Ausgang einer zweiten AND-Schaltung (40 ; 60) verbunden ist, deren Eingänge mit den Ausgängen des ersten bzw. des zweiten Elementes ($R_1$, $R_2$ ; $R_3$, $R_4$) der zugeordneten Leitung bzw. des ersten Elementes ($R_3$ ; $R_1$) der anderen Leitung verbunden sind.

4. Vorrichtung nach Anspruch 3, dadurch gekennzeichnet, daß ein zusätzlicher Eingang der zweiten AND-Schaltung (40 ; 60), die einer Leitung (I ; II) zugeordnet ist, ferner mit dem Ausgang des zweiten Elementes ($R_4$ ; $R_2$) der anderen Leitung verbunden ist.

Fig.1

Fig.2

Fig.3

$$Z_D$$

$$\frac{Z_1 \cdot Z_3}{Z_1+Z_2+Z_3}$$

$$Z_C$$

$$\frac{Z_2 \cdot Z_3}{Z_1+Z_2+Z_3}$$

$$\frac{Z_1 \cdot Z_2}{Z_1+Z_2+Z_3}$$

Fig.4

(L)

Fig.5